# FASCICULE DE BREVET EUROPEEN

(11) **EP 2 537 018 B1**
(45) Date de publication et mention de la délivrance du brevet: **29.07.2015**
(21) Numéro de dépôt: 11712906.4
(22) Date de dépôt: 15.02.2011
(51) Int. Cl.: G01N 15/06, F01N 9/00, F01N 11/00, F02D 41/14, F02D 41/22, G01N 27/04

(54) **PROCEDE ET DISPOSITIF POUR DETERMINER L'ETAT DE FONCTIONNEMENT D'UNE SONDE DE MESURE DE LA QUANTITE DE SUIE DANS LES GAZ D'ECHAPPEMENT D'UN VEHICULE**
VERFAHREN UND VORRICHTUNG ZUR BESTIMMUNG DES BETRIEBSSTATUS EINER SONDE ZUR MESSUNG DES RUSSAUFKOMMENS IM ABGASRAUCH EINES FAHRZEUGS
METHOD AND DEVICE FOR DETERMINING THE OPERATING STATUS OF A PROBE FOR MEASURING THE AMOUNT OF SOOT IN THE EXHAUST FUMES OF A VEHICLE

(30) Priorité: 16.02.2010 FR 1051084
(43) Date de publication de la demande: 26.12.2012
(73) Titulaire: Electricfil Automotive, 01708 Miribel Cedex (FR)
(72) Inventeur: DUAULT, Frédéric, F-38500 COUBLEVIE (FR); RAQUIN, Stéphane, F-69400 Villefranche/Saone (FR); ACHILLE, Laurence, F-69100 Villeurbanne (FR)
(74) Mandataire: Thibault, Jean-Marc
(86) Numéro de dépôt international: PCT/FR2011/050313
(87) Numéro de publication internationale: WO 2011/101586

(56) Documents cités:
- EP-A2- 1 102 054
- WO-A1-2008/028715
- DE-A1- 4 223 432
- DE-A1-102005 018 838
- DE-A1-102007 046 096
- DE-A1-102007 046 099

## Description

La présente invention concerne le domaine de la mesure de la quantité de suie déposée au niveau de l'échappement d'un moteur à combustion interne équipant un véhicule notamment automobile.

La présente invention concerne plus précisément un dispositif permettant de déterminer l'état de fonctionnement et en particulier l'état de dégradation d'une sonde mesurant le dépôt de suie intervenant dans les émissions polluantes en provenance des échappements automobiles.

Compte tenu des contraintes environnementales, il apparaît le besoin de pouvoir quantifier les émissions de particules ou de suie des moteurs thermiques avec une fiabilité et une précision élevées.

Dans l'état de la technique, différentes solutions ont été proposées pour la détection des suies dans les gaz d'échappement.

Par exemple, la demande de brevet FR 2 805 347 décrit un dispositif de mesure comportant une sonde interposée localement dans le flux gazeux de manière à capter les particules en circulation. Cette sonde comporte un support diélectrique allongé pourvu d'électrodes espacées l'une de l'autre. Les électrodes sont reliées à un système électronique permettant de mesurer la variation de la résistance électrique résultant du dépôt de suie sur le support diélectrique allongé. Ce système électronique comporte des moyens de traitement aptes à évaluer, à partir de la mesure de cette résistance électrique, le débit des particules transportées par le flux gazeux ou le degré d'encrassement d'un élément filtrant traversé par le flux gazeux transportant les particules.

La détermination du degré d'encrassement de l'élément filtrant permet de déterminer les moments les mieux appropriés pour déclencher un processus de nettoyage de l'élément filtrant. En effet, afin d'éviter un colmatage de l'élément filtrant, il est prévu périodiquement d'assurer sa régénération par combustion du dépôt de suie.

Afin de fournir une mesure précise, l'état de la technique a proposé diverses variantes de réalisation des électrodes de mesure. Il est connu de réaliser les électrodes de détection sous la forme de plots selon une surface rectangulaire. Les demandes de brevets DE 10 2007 046096 et WO 2008/006640 ont proposé de réaliser des électrodes de mesure sous la forme de peignes entrelacés l'un dans l'autre tout en étant distants l'un de l'autre. DE 10 2007 046099 décrit une sonde de mesure du dépôt de suie et un procédé pour déterminer l'état de fonctionnement de ladite sonde. DE 10 2005 018838 décrit une sonde de mesure du dépôt de suie, comportant des électrodes de détection disposées de manière adjacente et destinées à être reliées à un système électronique apte à évaluer la quantité de suie déposée sur la surface de collecte, la sonde comportant au moins une électrode de détection, un élément thermoélectronique Seebeck incluant ladite électrode de détection et reliée à un système de détection de la variation du voltage électrique de ledit élément, afin de déterminer la temperature.

DE 42 23 432 décrit un capteur de gaz, comportant des électrodes de détection disposées de manière adjacente et destinées à être reliées à un système électronique apte à évaluer la quantité de gaz sur la surface d'un film sensitif, la sonde comportant au moins une électrode de détection, un élément thermoélectronique Seebeck incluant ladite électrode de détection et reliée à un système de détection de la variation du voltage électrique de ledit élément, afin de déterminer la temperature.

Quelque soit la forme retenue pour la réalisation des électrodes, il doit être noté que ces électrodes doivent être réalisées en un matériau conducteur d'électricité pouvant résister à des températures relativement élevées de l'ordre de 900°C et aux agressions engendrées par les différentes émissions polluantes provenant des gaz d'échappement.

En pratique, il apparaît le besoin de déterminer l'état de fonctionnement des électrodes de détection afin de déterminer si l'absence de variation de la résistance mesurée provient d'une absence de suies dans l'échappement ou d'une dégradation des électrodes de détection, cette détection devant être fiable et simple de mise en oeuvre.

L'objet de l'invention vise donc à proposer une technique permettant de déterminer de manière simple et fiable, l'état de fonctionnement d'une sonde qui mesure la quantité de suie déposée sur une surface de collecte placée dans le flux des émissions polluantes en provenance des échappements automobiles.

Pour atteindre un tel objectif, le procédé selon l'invention détermine l'état de fonctionnement d'une sonde de mesure de la quantité de suie déposée sur une surface de collecte comportant des électrodes de détection disposées de manière adjacente et destinées à être reliées à un système électronique apte à évaluer la quantité de suie déposée.

Selon l'invention :
- on place au moins une électrode de détection dans une boucle de mesure,
- et on détecte les variations de la résistance électrique de la boucle de mesure pour déterminer l'état de fonctionnement des électrodes de détection.

De plus, le procédé selon l'invention peut présenter en outre en combinaison au moins l'une et/ou l'autre des caractéristiques additionnelles suivantes :
- déterminer l'état de non fonctionnement d'une électrode de détection lorsque la variation de la résistance électrique de la boucle de mesure comportant ladite électrode de détection, dépasse une valeur déterminée,
- placer en série de chaque électrode de détection, au moins une résistance de diagnostic de valeur ohmique déterminée,
- placer la résistance de diagnostic dans une surface de collecte des suies correspondant ou non à la surface de collecte comportant les électrodes de détection, ou en dehors d'une surface de collecte des suies,
- placer la résistance de diagnostic en regard de la surface de collecte afin de former une résistance de chauffage pour régénérer la surface de collecte,
- injecter un courant de valeur connue dans chacune des boucles de mesure pour détecter la variation de résistance électrique, de ladite boucle de mesure,
- injecter le courant à intervalles réguliers ou après chaque phase de régénération des électrodes de détection,
- déterminer la valeur ohmique d'au moins une résistance de diagnostic placée en regard de la surface de collecte afin d'en déduire la température de la sonde de mesure.

Un autre objet de l'invention est de proposer un dispositif de mesure du dépôt de suie déposée sur une surface de collecte d'un support diélectrique allongée comportant des électrodes de détection disposées de manière adjacente et destinées à être reliées à un système électronique apte à évaluer la quantité de suie déposée sur la surface de collecte.

Selon l'invention, le dispositif comporte pour au moins une électrode de détection, une boucle de mesure incluant ladite électrode de détection et reliée à un système de détection de la variation de la résistance électrique de ladite boucle de mesure, afin de déterminer l'état de fonctionnement de ladite électrode de détection.

De plus, le dispositif de mesure selon l'invention peut présenter en outre en combinaison au moins l'une et/ou l'autre des caractéristiques additionnelles suivantes :
- le support diélectrique se présente sous la forme d'une plaque allongée délimitant une partie distale et une partie proximale et possédant une première et une deuxième faces principales, les électrodes de détection et la surface de collecte étant aménagées sur l'une des faces principales à la partie distale de la plaque, au moins une électrode de détection étant montée en série avec au moins une résistance de diagnostic de valeur ohmique déterminée aménagée sur l'une et/ou l'autre des faces principales de la plaque,
- une résistance de diagnostic est placée dans une surface de collecte des suies correspondant ou non à la surface de collecte comportant les électrodes de détection,
- une résistance de diagnostic est placée en dehors de la surface de la collecte,
- une résistance de diagnostic est placée en regard de la surface de collecte afin de former une résistance de chauffage pour régénérer la surface de collecte,
- au moins une boucle de mesure comporte une piste de liaison électrique reliant directement l'électrode de détection à un plot de contact situé à la partie proximale de la plaque et une piste de liaison électrique via une résistance de diagnostic, entre l'électrode de détection et un plot de contact situé à la partie proximale de la plaque.
- au moins une piste de liaison électrique comporte une portion aménagée sur une face principale et une autre portion aménagée sur l'autre face principale de la plaque diélectrique, les deux portions étant reliées électriquement à travers l'épaisseur de la plaque diélectrique, de manière que l'un des plots de contact d'une boucle de mesure se trouve situé sur une face principale tandis que l'autre des plots de contact de la boucle de mesure se trouve situé sur l'autre face principale.

Diverses autres caractéristiques ressortent de la description faite ci-dessous en référence aux dessins annexés qui montrent, à titre d'exemples non limitatifs, des formes de réalisation de l'objet de l'invention.

Les **Figures 1A** et **1B** sont des vues respectivement recto et verso d'un premier mode de réalisation d'un dispositif de mesure conforme à l'invention.

La **Figure 2** illustre une variante de réalisation du mode de réalisation illustré aux **1A** et **1B**.

Les **Figures 3A** et **3B** sont des vues respectivement recto et verso d'un autre mode de réalisation d'un dispositif de mesure conforme à l'invention.

Les **Figures 4A** et **4B** sont des vues respectivement recto et verso d'un autre mode de réalisation du dispositif de mesure conforme à l'invention.

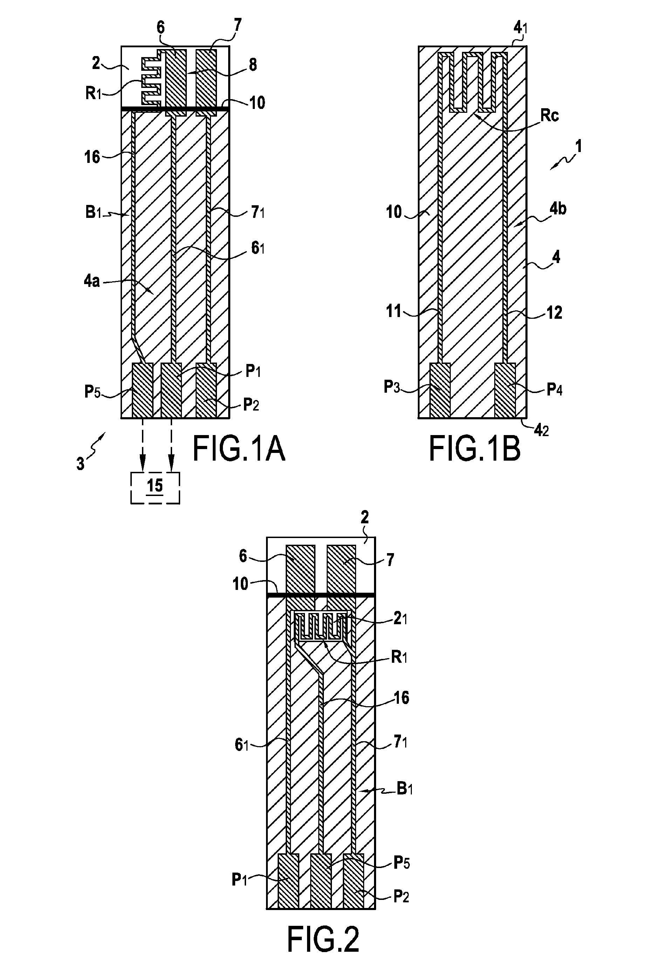

La **Fig. 1A** et **1B** illustrent un premier exemple de réalisation d'un dispositif **1** adapté pour mesurer le dépôt de suie sur une surface de collecte **2** d'une sonde de mesure **3** placée dans les gaz d'échappement d'un moteur à combustion interne d'un véhicule automobile. Cette sonde de mesure **3** comporte un support diélectrique allongé **4** présentant une partie distale **4₁** montée libre pour être en contact avec les gaz d'échappement et une partie proximale **4₂** montée sur un support non représenté. De manière classique, ce support diélectrique allongé **4** est monté à l'intérieur d'un corps tubulaire de protection non représenté mais de tout type connu en soi.

Le support diélectrique allongé **4** se présente sous la forme d'une mince plaquette rectangulaire comportant une première face principale **4a (****Fig.1A****)** s'étendant parallèlement à une deuxième face principale opposée **4b (****Fig. 1B**). Par exemple, ce support diélectrique allongé **4** est réalisé en une matière céramique.

Ce support diélectrique allongé **4** comporte, à sa partie distale **4₁,** des électrodes de détection disposées de manière adjacente ou côte à côte. Dans l'exemple illustré, le support diélectrique allongé **4** comporte une première électrode **6** et une deuxième électrode **7** aménagées sur la première face principale **4a,** en s'étendant au moins en partie sur la surface de collecte **2.** Les électrodes **6, 7** délimitent entre elles un espace interélectrode **8** destiné à recevoir des suies qui modifient la valeur diélectrique de cet espace **8.**

Les électrodes de détection **6, 7** sont représentées à la **Fig. 1A**, sous la forme de plots de forme rectangulaire mais il est clair que les électrodes **6, 7** peuvent être réalisées de manière différente comme par exemple sous la forme de peignes entrelacés.

Les électrodes de détection **6, 7** sont reliées via des liaisons électriques, à un système électronique non représenté mais connu en soi apte à évaluer la quantité de suie déposée sur la surface de collecte **2.** Les électrodes de détection **6, 7** sont reliées respectivement à des plots de contact **P₁** et **P₂** par l'intermédiaire de pistes de liaison électrique respectivement **6₁** et **7₁.** Les pistes de liaison électrique **6₁, 7₁** sont ainsi aménagées sur la première face **4a** du support diélectrique 4 assurant la liaison entre les électrodes **6, 7** et les plots de contact **P₁** et **P₂** aménagés à la partie proximale **4₂** du support diélectrique **4.**

Selon une variante préférée de réalisation, le support diélectrique **4** comporte une protection diélectrique **10** adaptée pour revêtir toute la face principale **4a** du support diélectrique **4** à l'exception de la surface de collecte **2** pourvue des électrodes **6, 7** et qui est destinée à recevoir les suies. Cette protection diélectrique **10** est réalisée par un revêtement diélectrique réalisé par exemple par sérigraphie ou par laminage. Selon une variante préférée de réalisation, cette protection diélectrique **10** recouvre également la deuxième face **4b** du support diélectrique **4.**

Selon une variante préférée de réalisation, la sonde de mesure **3** comporte également une résistance de chauffage **Rc** permettant de régénérer la surface de collecte **2.** Cette résistance de chauffage **Rc** est située au moins en regard ou en vis-à-vis de la surface de collecte **2.** Dans l'exemple de réalisation illustré aux **Fig. 1A** et **1B****,** la résistance de chauffage **Rc** est aménagée sur la deuxième face principale **4b** opposée à la première face **4a** qui est pourvue des électrodes de détection **6, 7.** Bien entendu, il peut être envisagé de réaliser la résistance de chauffage **Rc** au coeur ou à l'intérieur du support diélectrique **4.** Dans l'exemple illustré, la résistance de chauffage **Rc** est réalisée au dos de la surface de collecte **2** c'est-à-dire directement en vis-à-vis des électrodes **6, 7.** Cette résistance de chauffage **Rc** est donc aménagée à proximité de la partie distale **4₁** de la plaquette et se trouve reliée par des pistes de liaison électrique **11, 12** respectivement à des plots de contact **P₃** et **P₄** aménagés à la partie proximale **4₂** du support diélectrique **4.** Un tel circuit de chauffage est destiné à être relié via les plots de contact **P₃, P₄,** à une source électrique pilotée pour permettre la circulation d'un courant électrique et par suite obtenir la régénération de la sonde. Dans l'exemple illustré, les pistes de liaison électrique **11, 12** et les plots de contact **P₃, P₄** sont aménagés sur la deuxième face **4b.**

Conformément à l'invention, le dispositif de mesure **1** comporte au moins une boucle de mesure **B₁** incluant au moins une électrode de détection à savoir la première électrode **6** dans l'exemple illustré à la **Fig. 1A****.** Cette boucle de mesure **B₁** est destinée à être reliée à un système **15** de détection de la variation de la résistance électrique de la boucle de mesure **B₁** en vue de déterminer l'état de fonctionnement de l'électrode de détection. La boucle de mesure **B₁** présente une résistance électrique connue dont la mesure de la variation permet de déterminer la dégradation d'au moins l'électrode de détection faisant partie de cette boucle de détection.

Dans l'exemple de réalisation illustré, la boucle de détection **B₁** comporte une résistance de diagnostic **R₁** de valeur ohmique déterminée, de sorte que la boucle de mesure **B** possède une valeur de résistance électrique connue. Par exemple, la résistance ohmique de la résistance de diagnostic **R₁** peut présenter une valeur déterminée connue comprise à la température ambiante, entre 1 et 1 000 ohms et de préférence entre 100 et 200 ohms.

Dans l'exemple de réalisation à la **Fig. 1A**, la résistance de diagnostic **R₁** est placée au niveau de ou dans la surface de collecte **2,** à proximité des électrodes **6** et **7.** Cette résistance de diagnostic **R₁** est reliée électriquement en série à la première électrode **6** et, par une piste de liaison électrique **16** à un plot de contact **P₅.** Tel que cela ressort plus précisément de la **Fig. 1A**, la piste de liaison électrique **16** assure ainsi une liaison électrique entre la résistance de diagnostic **R₁** aménagée à proximité de la partie distale **4₁** du support diélectrique **4** et le plot de contact **P₅** aménagé à proximité de la partie distale **4₂** du support diélectrique **4.** La résistance de diagnostic **R₁,** la piste de liaison électrique **16** et le plot de contact **P₅** sont réalisés sur la première surface **4a** du support diélectrique **4.**

Il ressort de la description qui précède, que la boucle de mesure **B₁** comporte ainsi en série, le plot de contact **P₁,** la piste de liaison électrique **6₁**, la première électrode **6,** la résistance de diagnostic **R₁,** la piste de liaison électrique **16** et le plot de contact **P₅.** Cette boucle de mesure **B₁** est reliée via les plots de contact **P₁** et **P₅,** au système de détection **15** de la variation de la résistance électrique de la boucle de mesure **B₁.** Selon une variante avantageuse de réalisation, le système de détection **15** injecte ainsi dans la boucle de mesure **B₁,** un courant de valeur connue. Ce courant est injecté à intervalles réguliers ou après chaque phase de régénération des électrodes de détection **6, 7,** alors que la température de la sonde est connue.

Si la résistance électrique de la boucle de mesure **B₁** varie, alors il peut être estimé que la première électrode **6** présente une usure prématurée. Par analogie, en considérant que les électrodes **6** et **7** se dégradent sensiblement de manière identique, la détection de la dégradation de la première électrode de détection **6** conduit également à apprécier la détection de la dégradation de la deuxième électrode de détection **7.** Par exemple, il peut être estimé que la sonde de mesure ne fournit plus une mesure correcte lorsque la variation de résistance électrique dépasse une valeur de seuil comprise entre 15 et 20 %. Lorsque la variation de la résistance électrique de la boucle de mesure **B₁** atteint cette valeur de seuil critique, il peut être prévu de procéder à une correction du signal de la sonde via le système de détection **15** et/ou à un changement de la sonde.

Dans l'exemple de réalisation illustré aux **Fig. 1A** et **1B**, la résistance de diagnostic **R₁** est placée dans la surface de collecte **2** des suies.

La **Fig. 2** illustre une autre variante de réalisation dans laquelle la résistance de diagnostic **R₁** est placée dans une surface de collecte annexe **2₁.** Selon cet exemple de réalisation, la surface de collecte annexe **2₁** est également aménagée sur la première surface **4a** du support diélectrique **4,** à proximité de la surface de collecte **2.** Dans l'exemple illustré, la surface de collecte annexe **2₁** est réalisée par l'intermédiaire d'une fenêtre aménagée dans la protection diélectrique **10** et dans laquelle est réalisée la résistance de diagnostic **R₁.** Dans cet exemple de réalisation, la boucle de mesure **B₁** est constituée par le plot de contact **P₂,** la piste de liaison électrique **7₁,** la seconde électrode **7,** la résistance de diagnostic **R₁,** la piste de liaison électrique **16** et le plot de contact **P₅.**

Dans l'exemple illustré aux Fig. **1A, 1B** et **2**, le dispositif de mesure de dépôt de suie **1** comporte uniquement une boucle de mesure **B₁**. Bien entendu, il peut être envisagé de réaliser le dispositif de mesure avec une boucle de mesure pour chaque électrode **6, 7.**

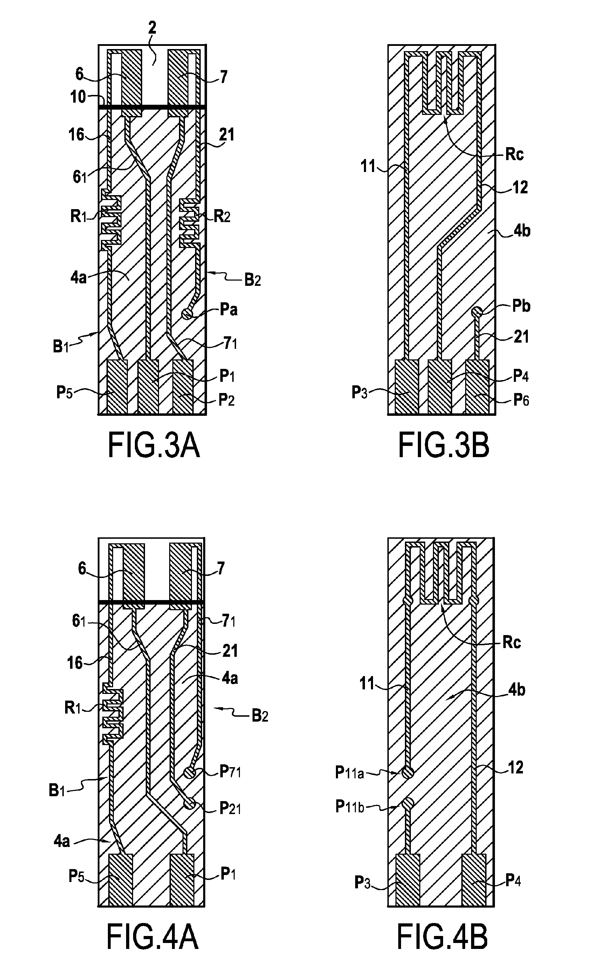

Les **Fig. 3A** et **3B** illustrent un autre mode de réalisation de l'invention comportant deux boucles de mesure **B₂** et **B₂** incluant dans chacune d'entre elle, une électrode respectivement, la première électrode **6** et la deuxième électrode **7.** Selon cette variante de réalisation, chaque boucle de mesure **B₁, B₂** comporte une résistance de diagnostic respectivement **R₁** et **R₂** aménagée en dehors de la surface de collecte **2.** Il est à noter qu'il peut être envisagé de réaliser les résistances **R₁, R₂** à l'intérieur de la surface de collecte **2.**

Tel que cela ressort plus précisément de la **Fig. 3A****,** chaque résistance de diagnostic **R₁, R₂** est protégée par la protection diélectrique **10.** A part cette différence, la première boucle de mesure **B₁** est identique à la boucle de mesure illustrée à la **Fig. 1A****.** Cette boucle de mesure **B₁** est donc constituée par le plot de contact **P₁,** la piste de liaison électrique **6₁**, la première électrode **6,** la piste de liaison électrique **16** munie de la résistance de diagnostic **R₁** et le plot de contact **P₅.** La deuxième boucle de mesure **B₂** comporte le plot de contact **P₂**, la piste de liaison électrique **7₁,** la deuxième électrode 7, une piste de liaison électrique **21,** la résistance de diagnostic **R₂** et un plot de contact **P₆.** Selon cet exemple de réalisation, chaque boucle de mesure **B₁, B₂** est reliée électriquement via respectivement, les plots de contact **P₁, P₅** et **P₂**, **P₆** au système de détection **15.**

Selon une variante préférée de réalisation, le plot **P₆** est aménagé non pas sur la première face **4a** mais sur la deuxième face **4b** du support diélectrique **4,** pour des raisons d'encombrement. Bien entendu, il peut être envisagé de réaliser les quatre plots de contact **P₁, P₅, P₂** et **P₆** sur la première face **4a** du support diélectrique **4** alors que les plots de contact **P₃**, **P₄** pour la résistance de chauffage **Rc** sont réalisés sur la deuxième face **4b** du support diélectrique **4.** Dans l'exemple illustré aux **Fig. 3A, 3B****,** la piste de liaison électrique **21** comporte deux tronçons aménagées sur chacune des faces **4a, 4b** du support et sont reliées entre elles à travers l'épaisseur du support diélectrique **4** en des points de liaison commune **Pₐ, P_{b}** aménagés respectivement sur les premières et deuxième faces **4a** et **4b** du support diélectrique **4.**

Les **Fig. 4A** et **4B** illustrent un autre mode de réalisation de l'invention par rapport au mode de réalisation illustré aux **Fig. 3A** et **3B****.** Selon ce mode de réalisation, une résistance de diagnostic, par exemple **R₂** de la deuxième boucle de mesure **B₂** est réalisée par la résistance de chauffage **Rc.** Selon cette variante de réalisation, la première boucle de mesure **B₁** reste identique aux premières boucles de mesure **B₁** illustrées dans les variantes de réalisation aux **Fig. 1A** et **3A****.** Cette boucle de mesure **B₁** est aménagée ainsi sur la face **4a** du support diélectrique **4** et se trouve réalisée par le plot de contact **P₁,** la piste de liaison électrique **6₁,** la première électrode **6,** la piste de liaison électrique **16** munie de la résistance de diagnostic **R₁** et le plot de contact **P₅.**

La deuxième boucle de mesure **B₂** comporte donc en série, la résistance de chauffage **Rc** et la seconde électrode de détection **7.** Dans la mesure où la résistance de chauffage **Rc** et la seconde électrode de détection **7** sont placées sur les deux faces distinctes respectivement **4b** et **4a** du support diélectrique **4,** les pistes de liaison électriques sont aménagées de manière à obtenir une liaison électrique à travers l'épaisseur du support diélectrique **4.** Ainsi, la deuxième boucle de mesure **B₂** comporte le plot de contact **P₄,** la piste électrique conductrice **12,** la résistance de chauffage **Rc,** la piste de liaison électrique **11** aménagés sur la deuxième face **4b** du support diélectrique **4.** La piste de liaison électrique **11** est reliée électriquement à la piste électrique **7₁** aménagée sur la première face **4a** via des plots de liaison commune respectivement **P7₁** et **P11ₐ.** La piste de liaison électrique **7₁** est reliée en série avec la seconde électrode **7** qui se trouve prolongée par une piste de liaison électrique **21** aménagée également sur la première face **4a.** Cette piste de liaison électrique **21** est reliée au plot de contact **P₃** par l'intermédiaire de plots de liaison commune **P21** et **P11_{b},** ce dernier plot de liaison commun **P11_{b}** étant relié au plot de contact **P₃.**

L'objet de l'invention vise donc à proposer une méthode pour déterminer l'état de fonctionnement d'une sonde de mesure de la quantité de suie déposée sur une surface de collecte **2.** Cette méthode consiste donc à placer au moins une électrode de détection **6, 7** dans une boucle de mesure **B₁, B₂** et à détecter les variations de résistance électrique de la boucle de mesure pour déterminer l'état de fonctionnement de l'électrode de détection. Avantageusement, le procédé consiste à placer chaque électrode de détection **6, 7** dans une boucle de mesure et à détecter les variations de résistance électrique de chaque boucle de mesure pour déterminer l'état de fonctionnement des électrodes de détection **6, 7.**

Selon une variante avantageuse de réalisation, on place en série de chaque électrode de détection **6, 7,** au moins une résistance **R₁, R₂** de la valeur ohmique connue. Ainsi, chaque boucle de mesure **B₁, B₂** présente une valeur déterminée de résistance électrique.

Afin de détecter une variation de la résistance électrique dans chaque boucle de mesure, le procédé prévoit avantageusement d'injecter un courant électrique de valeur connue dans chacune des boucles de mesure.

Il est à noter que le procédé selon invention donne la possibilité de connaître la valeur ohmique de la ou des résistances de diagnostic **R₁, R₂**. Cette valeur ohmique de la résistance de diagnostic **R₁, R₂** est déterminée à partir des valeurs connues du courant circulant dans la boucle de mesure et de la tension aux bornes de cette boucle de mesure. La détermination de la valeur ohmique d'au moins une résistance de diagnostic permet d'en déduire la température de la sonde de mesure.

L'invention n'est pas limitée aux exemples décrits et représentés car diverses modifications peuvent y être apportées sans sortir de son cadre.

## Revendications

1. Procédé pour déterminer l'état de fonctionnement d'une sonde **(3)** de mesure de la quantité de suie déposée sur une surface de collecte **(2)** comportant des électrodes de détection **(6, 7)** disposées de manière adjacente et destinées à être reliées à un système électronique **(15)** apte à évaluer la quantité de suie déposée, **caractérisé en ce que** :
- on place au moins une électrode de détection **(6, 7)** dans une boucle de mesure **(B₁, B₂**),
- et on détecte les variations de la résistance électrique de la boucle de mesure **(B₁, B₂**) pour déterminer l'état de fonctionnement des électrodes de détection **(6, 7).**

2. Procédé selon la revendication 1, **caractérisé en ce qu'**on détermine l'état de non fonctionnement d'une électrode de détection **(6, 7)** lorsque la variation de la résistance électrique de la boucle de mesure comportant ladite électrode de détection, dépasse une valeur déterminée.

3. Procédé selon la revendication 1, **caractérisé en ce qu'**on place en série de chaque électrode de détection **(6, 7),** au moins une résistance de diagnostic (**R₁**, **R₂)** de valeur ohmique déterminée.

4. Procédé selon la revendication 3, **caractérisé en ce qu'**il consiste à placer la résistance de diagnostic **(R₁, R₂**) dans une surface de collecte **(2, 2₁**) des suies correspondant ou non à la surface de collecte **(2)** comportant les électrodes de détection **(6, 7),** ou en dehors d'une surface de collecte des suies.

5. Procédé selon la revendication 3, **caractérisé en ce qu'**il consiste à placer la résistance de diagnostic (**R₁**, **R₂**) en regard de la surface de collecte afin de former une résistance de chauffage **(Rc)** pour régénérer la surface de collecte **(2).**

6. Procédé selon l'une des revendications 1 à 4, **caractérisé en ce qu'**il consiste à injecter un courant de valeur connue dans chacune des boucles de mesure **(B₁, B₂**) pour détecter la variation de résistance électrique, de ladite boucle de mesure.

7. Procédé selon la revendication 6, **caractérisé en ce qu'**il consiste à injecter le courant à intervalles réguliers ou après chaque phase de régénération des électrodes de détection **(6, 7).**

8. Procédé selon la revendication 6, **caractérisé en ce qu'**il consiste à déterminer la valeur ohmique d'au moins une résistance de diagnostic **(R₁, R₂)** afin d'en déduire la température de la sonde de mesure.

9. Dispositif de mesure du dépôt de suie comportant une sonde de mesure **(3)** de la quantité de suie déposée sur une surface de collecte **(2)** d'un support diélectrique allongée **(4)** comportant des électrodes de détection **(6, 7)** disposées de manière adjacente et destinées à être reliées à un système électronique apte à évaluer la quantité de suie déposée sur la surface de collecte, **caractérisé en ce qu'**il comporte pour au moins une électrode de détection **(6, 7),** une boucle de mesure **(B₁, B₂)** incluant ladite électrode de détection **(6, 7**) et reliée à un système (15) de détection de la variation de la résistance électrique de ladite boucle de mesure, ledit système étant adapté pour déterminer l'état de fonctionnement de ladite électrode de détection.

10. Dispositif de mesure selon la revendication 9, **caractérisé en ce que** le support diélectrique **(4)** se présente sous la forme d'une plaque allongée délimitant une partie distale **(4₁)** et une partie proximale **(4₂)** et possédant une première **(4a)** et une deuxième **(4b)** faces principales, les électrodes de détection **(6, 7)** et la surface de collecte **(2)** étant aménagées sur l'une des faces principales à la partie distale de la plaque, au moins une électrode de détection **(6, 7)** étant montée en série avec au moins une résistance de diagnostic **(R₁, R₂)** de valeur ohmique déterminée aménagée sur l'une et/ou l'autre des faces principales de la plaque.

11. Dispositif de mesure selon la revendication 10, **caractérisé en ce qu'**une résistance de diagnostic **(R₁, R₂)** est placée dans une surface de collecte **(2, 2₁**) des suies correspondant ou non à la surface de collecte comportant les électrodes de détection.

12. Dispositif de mesure selon la revendication 10, **caractérisé en ce qu'**une résistance de diagnostic **(R₁, R₂)** est placée en dehors de la surface de collecte **(2, 2₁).**

13. Dispositif de mesure selon la revendication 10, **caractérisé en ce qu'**une résistance de diagnostic **(R₁, R₂)** est placée en regard de la surface de collecte **(2)** afin de former une résistance de chauffage **(Rc)** pour régénérer la surface de collecte.

14. Dispositif de mesure selon l'une des revendications 10 à 13, **caractérisé en ce qu'**au moins une boucle de mesure **(B₁, B₂)** comporte une piste de liaison électrique **(6₁, 7₁)** reliant directement l'électrode de détection **(6, 7)** à un plot de contact **(P₁, P₂**) situé à la partie proximale de la plaque et une piste de liaison électrique **(16, 21)** via une résistance de diagnostic **(R₁, R₂)**, entre l'électrode de détection et un plot de contact **(P₅, P₆**) situé à la partie proximale de la plaque.

15. Dispositif de mesure selon la revendication 14, **caractérisé en ce qu'**au moins une piste de liaison électrique **(21)** comporte une portion aménagée sur une face principale **(4a)** et une autre portion aménagée sur l'autre face principale **(4b)** de la plaque diélectrique **(4),** les deux portions étant reliées électriquement à travers l'épaisseur de la plaque diélectrique **(4),** de manière que l'un des plots de contact d'une boucle de mesure se trouve situé sur une face principale tandis que l'autre des plots de contact de la boucle de mesure se trouve situé sur l'autre face principale.

## Patentansprüche

1. Verfahren zur Bestimmung des Betriebsstatus einer Sonde (3) zur Messung des Aufkommens an Ruß, der auf einer Sammelfläche (2) abgelagert wird, umfassend Erfassungselektroden (6, 7), die aneinander angrenzend angeordnet und dazu bestimmt sind, mit einem elektronischen System (15) verbunden zu werden, das geeignet ist, das abgelagerte Rußaufkommen zu bewerten, **dadurch gekennzeichnet, dass**
- mindestens eine Erfassungselektrode (6, 7) in einer Messschleife (B₃, B₂) angeordnet wird
- und die Veränderungen des elektrischen Widerstandes der Messschleife (B₁, B₂) erfasst werden, um den Betriebsstatus der Erfassungselektroden (6, 7) zu bestimmen.

2. Verfahren nach Anspruch 1, **dadurch gekennzeichnet, dass** der Nichtbetriebsstatus einer Erfassungselektrode (6, 7) bestimmt wird, wenn die Veränderung des elektrischen Widerstandes der Messschleife, die die Erfassungselektrode umfasst, einen bestimmten Wert überschreitet.

3. Verfahren nach Anspruch 1, **dadurch gekennzeichnet, dass** in Serie zu jeder Erfassungselektrode (6,7) mindestens ein Diagnosewiderstand (R₁, R₂) mit einem bestimmten Ohm-Wert angeordnet wird.

4. Verfahren nach Anspruch 3, **dadurch gekennzeichnet, dass** es darin besteht, den Diagnosewiderstand (R₁, R₂) in einer Sammelfläche (2, 2₁) für Ruß, die der Sammelfläche (2) entspricht oder nicht, und die die Erfassungselektroden (6, 7) umfasst, oder außerhalb einer Rußsammeifläche anzuordnen.

5. Verfahren nach Anspruch 3, **dadurch gekennzeichnet, dass** es darin besteht, den Diagnosewiderstand (R₁, R₂) gegenüber der Sammelfläche anzuordnen, um einen Heizwiderstand (Rc) zu bilden, um die Sammelfläche (2) zu regenerieren.

6. Verfahren nach einem der Ansprüche 1 bis 4, **dadurch gekennzeichnet, dass** es darin besteht, einen Strom mit einem bekannten Wert in jede der Messschleifen (B₁, B₂) einzuleiten, um die Veränderung des elektrischen Widerstands der Messschleife zu erfassen.

7. Verfahren nach Anspruch 6, **dadurch gekennzeichnet, dass** es darin besteht, den Strom in regelmäßigen Abständen oder nach jeder Regenerationsphase der Erfassungselektroden (6, 7) einzuleiten.

8. Verfahren nach Anspruch 6, **dadurch gekennzeichnet, dass** es darin besteht, den Ohm-Wert mindestens eines Diagnosewiderstandes (R₁, R₂) zu bestimmen, um davon die Temperatur der Messsonde abzuleiten.

9. Vorrichtung zur Messung des Rußaufkommens, umfassend eine Sonde (3) zum Messen des auf einer Sammelfläche (2) eines länglichen dielektrischen Trägers (4) abgelagerten Rußaufkommen, umfassend Erfassungselektroden (6, 7), die aneinandergrenzend angeordnet und dazu bestimmt sind, mit einem elektronischen System verbunden zu werden, das geeignet ist, das auf der Sammelfläche abgelagerte Rußaufkommen zu bewerten, **dadurch gekennzeichnet, dass** sie für mindestens eine Erfassungselektrode (6, 7) eine Messschleife (B₁, B₂) umfasst, die die Erfassungselektrode (6, 7) einschließt und mit einem System (15) zur Erfassung der Veränderung des elektrischen Widerstandes der Messschleife verbunden ist, wobei das System dazu vorgesehen ist, den Betriebsstatus der Erfassungselektrode zu bestimmen.

10. Messvorrichtung nach Anspruch 9, **dadurch gekennzeichnet, dass** der dielektrische Träger (4) in Form einer länglichen Platte vorhanden ist, die einen distalen Teil (4₁) und eine proximalen Teil (4₂) begrenzt und eine erste (4a) und eine zweite Hauptfläche (4b) besitzt, wobei die Erfassungselektroden (6, 7) und die Sammelfläche (2) auf einer der Hauptflächen am distalen Teil der Platte angeordnet sind, wobei mindestens eine Erfassungselektrode (6, 7) in Serie mit mindestens einem Diagnosewiderstand (R₁, R₂) mit einem bestimmten Ohm-Wert, der auf der einen und/oder der anderen der Hauptflächen der Platte angeordnet ist, montiert ist.

11. Messvorrichtung nach Anspruch 10, **dadurch gekennzeichnet, dass** ein Diagnosewiderstand (R₁, R₂) in einer Rußsammelfläche (2, 2₁) angeordnet ist, die der Sammelfläche, umfassend die Erfassungselektroden, entspricht oder nicht.

12. Messvorrichtung nach Anspruch 10, **dadurch gekennzeichnet, dass** ein Diagnosewiderstand (R₁, R₂) außerhalb der Sammelfläche (2, 2₁) angeordnet ist.

13. Messvorrichtung nach Anspruch 10, **dadurch gekennzeichnet**, das ein Diagnosewiderstand (R₁, R₂) gegenüber der Sammelfläche (2) angeordnet ist, um einen Heizwiderstand (Rc) zu bilden, um die Sammelfläche zu regenerieren.

14. Messvorrichtung nach einem der Ansprüche 10 bis 13, **dadurch gekennzeichnet, dass** mindestens eine Messschleife (B₁, B₂) eine elektrische Verbindungsspur (6₁, 7₁), die die Erfassungselektrode (6, 7) direkt mit einem Kontaktstück (P₁, P₂), das sich am proximalen Teil der Platte befindet, verbindet, und eine elektrische Verbindungsspur (16, 21) über einen Diagnosewiderstand (R₁, R₂) zwischen der Erfassungselektrode und einem Kontaktstück (P₅, P₆), das sich am proximalen Teil der Platte befindet, umfasst.

15. Messvorrichtung nach Anspruch 14, **dadurch gekennzeichnet, dass** mindestens eine elektrische Verbindungsspur (21) einen Abschnitt, der auf einer Hauptfläche (4a) angeordnet ist, und einen weiteren Abschnitt, der auf der anderen Hauptfläche (4b) der dielektrischen Platte (4) angeordnet ist, umfasst, wobei die beiden Abschnitte elektrisch durch die Dicke der dielektrischen Platte (4) verbunden sind, so dass eines der Kontaktstücke einer Messschleife auf einer Hauptfläche angeordnet ist, während sich das andere der Kontaktstücke der Messschleife auf der anderen Hauptfläche befindet.

## Claims

1. A method of determining the operating state of a measuring probe (3) for measuring the quantity of soot deposited on a collection surface (2), said probe including detection electrodes (6, 7) that are arranged in adjacent manner and that are for connecting to an electronic system (15) that is capable of evaluating the quantity of soot that has been deposited, said method bering **characterized in that**:
· at least one detection electrode (6, 7) is placed in a measurement loop (B₁, B₂) ; and
· the variations in the electric resistance of the measurement loop (B₁, B₂) are detected, so as to determine the operating state of the detection electrodes (6, 7).

2. A method according to claim 1, **characterized in that** a detection electrode (6, 7) is determined as being in an inoperative state when the variation in the electric resistance of the measurement loop including said detection electrode, exceeds a determined value.

3. A method according to claim 1, **characterized in that** at least one diagnostic resistor (R₁, R₂) of determined resistance is placed in series with each detection electrode (6, 7).

4. A method according to claim 3, **characterized in that** it consists in placing the diagnostic resistor (R₁, R₂) on a soot collection surface (2, 2₁) that optionally corresponds to the collection surface (2) including the detection electrodes (6, 7), or away from a soot collection surface.

5. A method according to claim 3, **characterized in that** it consists in placing the diagnostic resistor (R₁, R₂) in register with the collection surface, so as to form a heater resistor (Rc) for regenerating the collection surface (2).

6. A method according to any one of claims 1 to 4, **characterized in that** it consists in injecting a current of known value into each of the measurement loops (B₁, B₂), so as to detect variation in the electric resistance thereof.

7. A method according to claim 6, **characterized in that** it consists in injecting the current at regular intervals or after each stage of regenerating the detection electrodes (6, 7);

8. A method according to claim 6, **characterized in that** it consists in determining the resistance of at least one diagnostic resistor (R₁, R₂), so as to deduce the temperature of the measuring probe.

9. A measuring device for measuring soot deposition, said device comprising a measuring probe (3) for measuring the quantity of soot deposited on a collection surface (2) of an elongate dielectric substrate (4), said probe including detection electrodes (6, 7) that are arranged in adjacent manner and that are for connecting to an electronic system that is capable of devaluating the quantity of soot deposited on the collection surface, said device being **characterized in that** it includes, for at least one detection electrode (6, 7), a measurement loop (B₁, B₂) that includes said at least one detection electrode (6, 7) and that is connected to a detection system (15) for detecting the variation in the electric resistance of said measurement loop, said system being adapted to determine the operating state of said detection electrode.

10. A measuring device according to claim 9, characterizes in that the dielectric substrate (4) is in the form of an elongate plate defining a distal portion (4₁) and a proximal portion (4₂) and having first and second main faces (4a, 4b), the detection electrodes (6, 7) and the collection surface (2) being arranged on one of the main faces at the distal portion of the plate, at least one detection electrode (6, 7) being connected in series with at least one diagnostic resistor (R₁, R₂) of determined resistance, arranged on at least one of the main faces of the plate.

11. A measuring device according to claim 10, **characterized in that** a diagnostic resistor R₁, R₂) is placed on a soot collection surface (2, 2₁) that optionally corresponds to the collection surface including the detection electrodes.

12. A measuring device according to claim 10, **characterized in that** a diagnostic resistor (R₁, R₂) is placed away from the collection surface (2, 2₁) .

13. A measuring device according to claim 10, **characterised in that** a diagnostic resistor (R₁, R₂) is placed in register with the collection surface (2), so as to form a heater resistor (Rc) for regenerating the collection surface.

14. A measuring device according to any one of claims 10 to 13, **characterized in that** at least one measurement loop (B₁, B₂) comprises an electrical connection track (6₁, 7₁) directly connecting the detection electrode (6, 7) to a contact pad (P₁ P₂) situated at the proximal portion of the plate, and an electrical connection track (16, 21) passing via a diagnostic resistor (R₁, R₂), between the detection electrode and a contact pad (P₅, P₆) situated at the proximal portion of the plate.

15. A measuring device according to claim 14, **characterized in that** at least one electrical connection track (21) includes one portion arranged on one main face (4a) and another portion arranged on the other main face (4b) of the dielectric plate (4), the two portions being electrically connected together through the thickness of the dielectric plate (4), in such a manner that one of the contact pads of a measurement loop is situated on one main face while the other contact pad of the measurement loop is situated on the other main face.
